# EUROPÄISCHE PATENTANMELDUNG

(11) **EP 2 264 192 A1**
(43) Veröffentlichungstag der Anmeldung: **22.12.2010**
(21) Anmeldenummer: 10165925.8
(22) Anmeldetag: 15.06.2010
(51) Int. Cl.: C21D 1/10, C21D 1/42, C21D 1/667, C21D 1/74, C21D 9/32

(54) **Härtemaschine zum induktiven Härten unter Schutzgas**

(30) Priorität: 15.06.2009 DE 102009026935
(71) Anmelder: Ema Indutec GmbH, 74909 Meckesheim (DE)
(72) Erfinder: Bellen, Pascal, 69190, Walldorf (DE); Braner, Michael, 69245, Bammental (DE); Nollert, Markus, 74918, Angelbachtal (DE); Sing, Jürgen, 69257 Wiesenbach (DE)
(74) Vertreter: Sommer, Peter

(57) **Zusammenfassung**

Die Erfindung betrifft eine Härtemaschine (1) zum induktiven Härten unter Schutzgas, umfassend einen Induktor (5), eine Abschreckbrause (6), einen Schutzgasauslass (11) und eine Schutzgashaube (10), die so an dem Werkstück (2) positionierbar ist, dass eine den zu härtenden Teil umgebende Schutzgaskammer (24) entsteht, in der der Induktor (5), die Abschreckbrause (6) und der Schutzgasauslass (11) angeordnet und einer Bewegungsrichtung folgend am Werkstück (2) entlang bewegbar sind. Weiterhin ist ein in Bewegungsrichtung nach dem Werkstück (2) angeordnetes Haubenteil (14) vorgesehen, das während des Härtens in seiner Lage gegenüber dem Werkstück (2) fest bleibt, wobei der Induktor (5) und der Schutzgasauslass (11) zumindest teilweise in das Haubenteil (14) hinein bewegbar sind, so dass der gesamte zu härtende Teil des Werkstücks (2) mittels der Abschreckbrause (6) abschreckbar ist.

## Beschreibung

### Technisches Gebiet

Die Erfindung betrifft eine Härtemaschine zum induktiven Härten zumindest eines Teils eines Werkstücks unter Schutzgas.

### Stand der Technik

Beim Härten eines metallischen Werkstücks unter normaler sauerstoffhaltiger Atmosphäre tritt eine Verzunderung der erwärmten Bereiche des Werkstücks auf. Diese Verschmutzung der Oberfläche des Werkstücks, die aufgrund einer Reaktion von Sauerstoffs mit dem Metall auftritt, kann zwar nachträglich entfernt werden, was aber mit zusätzlichem Aufwand verbunden ist. Daher ist es vorteilhaft, sie von vorneherein zu vermeiden, was möglich ist, indem der gesamte Härteprozess unter einer Schutzgasatmosphäre ausgeführt wird.

Eine Vorrichtung zum induktiven Härten von Werkstücken unter Schutzgasatmosphäre ist beispielsweise aus der DE 28 42 372 C2 bekannt. Die Vorrichtung umfasst eine Durchlaufkammer aus zwei sich gegenüberliegenden Seitenwänden und einer Deckenwand, wobei die Seitenwände zum Abdichten in ein Wasserbad eingetaucht werden und die offenen Seiten mittels eines laminaren Flüssigkeitsvorhangs abgedichtet werden, so dass in der Durchlaufkammer mittels eines eingeleiteten Schutzgases eine Schutzgasatmosphäre herstellbar ist. Ein Werkstück wird vollständig in die Durchlaufkammer hinein bewegt und dort mittels eines Induktors erwärmt und mittels Abschreckbrause abgeschreckt.

Gerade bei besonders großen Werkstücken stellt eine solche Durchlaufkammer, in die das gesamte Werkstück hinein bewegt wird, keine sinnvolle Lösung dar. Es ist oft auch gar nicht notwendig, das gesamte Werkstück zu härten und somit auch keine das ganze Werkstück umgebende Schutzgasatmosphäre erforderlich. Bei großen Zahnrädern müssen beispielsweise oft nur die Zahnflanken gehärtet werden.

Der Erfindung liegt daher die Aufgabe zugrunde, eine Härtemaschine bereitzustellen, die ein induktives Härten von Teilbereichen eines Werkstücks unter Schutzgasatmosphäre ermöglicht.

### Darstellung der Erfindung

Die erfindungsgemäße Härtemaschine zum induktiven Härten unter Schutzgas umfasst einen Induktor, der zur Erwärmung zumindest eines Teils des Werkstücks an dem Werkstück positionierbar ist, mindestens eine Abschreckbrause für ein Kühlmittel zum Abschrecken des erwärmten Teils des Werkstücks, mindestens einen Schutzgasauslass, durch den während des Erwärmens und/oder Abschreckens ein Schutzgas geleitet wird, und eine Schutzgashaube, die so an das Werkstück bringbar ist, dass eine den zu härtenden Teil zumindest teilweise umgebende Schutzgaskammer entsteht, in der der Induktor, die mindestens eine Abschreckbrause und der mindestens eine Schutzgasauslass angeordnet sind. Die Schutzgashaube ist an dem zu härtenden Teil des Werkstücks positionierbar und weist zwei Seitenwände auf, die jeweils benachbart zum zu härtenden Bereich mit einer Kante an eine Wand des Werkstücks angrenzend positionierbar sind. Weiterhin weist die Schutzgashaube eine zum Werkstück beabstandete Rückwand auf, welche die Seitenwände über ihre gesamte Höhe verbindet und der Induktor, der mindestens eine Schutzgasauslass und die mindestens eine Abschreckbrause sind zwischen der Schutzgashaube und dem Werkstück angeordnet. Der Induktor, der mindestens eine Schutzgasauslass und die mindestens eine Abschreckbrause sind zum Härten zumindest eines Teils des Werkstücks entlang des Teils des Werkstücks einer Bewegungsrichtung folgend bewegbar. Der mindestens eine Schutzgasauslass ist in Bewegungsrichtung nach dem Induktor und die mindestens eine Abschreckbrause ist in Bewegungsrichtung nach dem mindestens einen Schutzgasauslass angeordnet. Weiterhin ist ein in Bewegungsrichtung nach dem Werkstück angeordnetes Haubenteil vorgesehen, das während des Erwärmens und/oder Abschreckens in seiner Lage gegenüber dem Werkstück fest bleibt, wobei der Induktor und der mindestens eine Schutzgasauslass so weit in das Haubenteil hinein bewegbar sind, dass der gesamte zu härtende Teil des Werkstücks mittels der Abschreckbrause abschreckbar ist. Dies hat zur Folge, dass sich die Lage des Haubenteils gegenüber dem Werkstück nicht ändert.

Der Induktor, der an das Werkstück herangebracht und einer Bewegungsrichtung folgend entlang des Werkstücks bewegt werden kann, ermöglicht es, einen Teilbereich eines Werkstücks, wie beispielsweise zwei gegenüberliegende Zahnflanken eines Zahnradrings, zu erwärmen. Die der Bewegung des Induktors folgende Abschreckbrause ermöglicht das schnelle Abkühlen der erwärmten Teile des Werkstücks und damit das Härten des Teilbereichs.

Durch die Schutzgashaube, die an dem zu härtenden Teil des Werkstücks angeordnet wird, und teilweise mittels des in Bewegungsrichtung dem Werkstück folgend angeordneten Haubenteils ist es möglich, eine Schutzgasatmosphäre in dem sich bildenden Innenraum zwischen Schutzgashaube und Werkstück bzw. Schutzgashaube, Haubenteil und Werkstück herzustellen und so eine Verzunderung der erwärmten Teilbereiche des Werkstücks zu verhindern.

Dadurch das der Induktor und der mindestens eine Schutzgasauslass so weit in das Haubenteil hinein bewegbar sind, dass der gesamte zu härtende Teil des Werkstücks mittels der Abschreckbrause abschreckbar ist, ohne dass das Haubenteil von dem Werkstück wegbewegt wird, kann sichergestellt werden, dass die Schutzgasatmosphäre an den erwärmten Teilen des Werkstücks so lange aufrecht erhalten wird, bis diese abgeschreckt worden sind, dass also im gesamten zu härtenden Teil des Werkstücks keine Verzunderung auftritt.

Die Ausformung der Schutzgashaube und des Haubenteils richtet sich dabei genauso nach der Ausformung des zu härtenden Werkstücks, wie die Form des Induktors und der Abschreckbrause.

Vorteilhafterweise verläuft die Bewegungsrichtung in vertikaler Richtung von unten nach oben, so dass das Haubenteil in vertikaler Richtung oberhalb und die Schutzgashaube seitlich am Werkstück angeordnet wird, der mindestens eine Schutzgasauslass in vertikaler Richtung unterhalb des Induktors und die mindestens eine Abschreckbrause in vertikaler Richtung unterhalb des mindestens einen Schutzgasauslasses angeordnet wird.

Durch das Vorsehen mindestens eines Schutzgasauslass unterhalb des Induktors wird sichergestellt, dass trotz der aufgrund der Abwärme des Induktors und des erwärmten Werkstücks auftretenden nach oben gerichteten Strömung des Schutzgases der gesamte erwärmte und noch nicht abgeschreckte Bereich des Werkstücks immer von Schutzgas umströmt wird.

Ein in vertikaler Richtung entlang eines Werkstücks bewegbarer Induktor ist besonders gut geeignet um beispielsweise Zahnflanken von Zahnradringen zu Härten. Eine Bewegungsrichtung von unten nach oben hat weiterhin den Vorteil, dass ein Kühlmittel, welches aus der unterhalb des Induktors angeordneten Abschreckbrause austritt, sich wegen der Schwerkraft auf alle Fälle nach unten bewegt und damit nicht in den zu erwärmenden Bereich gelangt.

Vorteilhafterweise schliesst die Bewegunsgsrichtung mit einem vertikal verlaufenden Lot einen spitzen Winkel ein und verläuft von unten nach oben. Dadurch ist es beispielsweise möglich, auch schräg verlaufende Verzahnungen von Zahnradringen zu härten.

Vorteilhafterweise weist das Haubenteil Seitenwände und eine Deckenwand auf, wobei die Seitenwände in einem horizontalen Schnitt eine geschlossene Form aufweisen und so zum Werkstück angeordnet werden können, dass eine dem Werkstück zugewandte Kante der Seitenwände zumindest teilweise auf einer an den zu erwärmenden Teil angrenzenden, zur Bewegungsrichtung näherungsweise senkrecht verlaufenden Wand des Werkstücks im zu härtenden Bereich aufsetzbar ist, wobei die zum Werkstück beabstandete Kante der Seitenwände mit der Deckenwand abschließen.

Dadurch entsteht ein nach einer Seite offenes Volumen, welches in Bewegungsrichtung an den zu härtenden Bereich des Werkstücks angrenzt, wobei das Volumen je nach Ausführungsvariante der Schutzgashaube während des gesamten Härteprozesses oder nur während eines Teils des Härteprozesses einen Teil der Schutzgaskammer bildet. Bei einer vertikalen Bewegungsrichtung nimmt das Haubenteil das aufgrund der Erwärmung nach oben strömende Schutzgas auf.

Vorteilhafterweise ist mindestens ein weiterer in Bewegungsrichtung vor dem Induktor angeordneter Schutzgasauslass vorgesehen.

Da das in die Schutzgaskammer einströmende Schutzgas auch eine kühlende Wirkung hat, die den Härteprozess stören kann, ist es vorteilhaft, das Schutzgas mit entsprechend weniger Druck durch mehrere um den Induktor herum verteilte Schutzgasauslässe in die Schutzgaskammer einströmen zu lassen, so dass es sich schneller verteilt und die ausströmende Menge an Schutzgases der einzelnen Schutzgasauslässe möglichst gering gehalten werden kann.

Weitere Schutzgasauslässe ermöglichen es weiterhin, in der vor dem Härteprozess, nach Heranbringen der Schutzgashaube an das Werkstück noch mit Sauerstoff gefüllten Schutzgaskammer möglichst schnell ein Schutzgasatmosphäre herzustellen und es treten geringere Strömungsturbulenzen auf, was zu einer höheren Güte der Oberfläche führt.

Vorteilhafterweise werden der Induktor, der mindestens eine Schutzgasauslass und die mindestens eine Abschreckbrause an der Schutzgashaube gehalten und die Schutzgashaube ist in Bewegungsrichtung entlang des zu härtenden Teils des Werkstücks bewegbar.

Dadurch kann die gesamte Einheit aus Schutzgashaube, Induktor, Schutzgasauslass und Abschreckbrause gemeinsam entlang eines Werkstücks bewegt werden und ist so unabhängig von der Ausdehnung des zu härtenden Bereichs des Werkstücks, wodurch die erfindungsgemäße Härtemaschine universeller einsetzbar wird.

Vorteilhafterweise ist die Schutzgashaube zumindest teilweise in das Haubenteil hinein bewegbar. Dadurch kann sichergestellt werden, dass der an der Schutzgashaube befestigte Induktor und der Schutzgasauslass so weit in das Haubenteil hinein bewegt werden können, dass auch der gesamte zu härtende Teil des Werkstücks abgeschreckt werden kann, ohne das sich das an das Werkstück angrenzende Haubenteil vom Werkstück löst. Dadurch bleibt die um den zu härtenden Bereich gebildete Schutzgaskammer, die von dem Werkstück, der Schutzgashaube und zumindest zeitweise dem Haubenteil begrenzt wird, während des gesamten Härteprozesses erhalten und es kann sichergestellt werden, dass keine Verzunderung des Werkstücks im zu härtenden Bereich auftritt.

Vorteilhafterweise weist die Schutzgashaube eine weitere Seitenwand auf, die im Bereich des in Bewegungsrichtung vorderen Randes der Seitenwände vor dem Induktor angeordnet ist und näherungsweise mit den Seitenwänden, der Rückwand und zumindest zeitweise näherungsweise mit den der Schutzgashaube zugewandten Wänden des Werkstücks abschließt.

Dadurch wird die durch das seitliche anbringen der Schutzgashaube an das Werkstück gebildete Schutzgaskammer auf der in Bewegungsrichtung zeigenden Seite abgeschlossene, wodurch sich eine zumindest näherungsweise durch Werkstück, Schutzgashaube, weitere Seitenwand und Abschreckbrause geschlossene Schutzgaskammer bildet, solange sich die Schutzgaskammer in Bewegungsrichtung nicht über den Rand des Werkstücks hinaus erstreckt. Wird die Schutzgaskammer in Bewegungsrichtung über den Rand des Werkstücks hinaus bewegt, so wird jene seitlich begrenzende Wand der Schutzgaskammer, die vorher von dem Werkstück gebildet wurde, durch das dem Werkstück in Bewegungsrichtung folgend angeordnete Haubenteil ersetzt, so dass die Schutzgaskammer aus der Schutzgashaube, zumindest teilweise dem Werkstück und dem Haubenteil gebildet wird.

Vorteilhafterweise weist die weitere Seitenwand mindestens einen weiteren Schutzgasauslass auf, der so angeordnet ist, dass das Schutzgas in Richtung des Werkstücks und/oder der Bewegungsrichtung entgegen ausströmt.

Da die Schutzgaskammer mittels der weiteren Seitenwand nur näherungsweise abgeschlossen ist, vereinfacht der Schutzgasauslass in der weiteren Seitenwand das Herstellen und Erhalten einer Schutzgasatmosphäre in der Schutzgaskammer, ohne dass die Menge Schutzgas, die durch den mindestens einen innerhalb der Schutzgashaube angeordneten Schutzgasauslass in die Kammer einströmt, erhöht werden muss. Dadurch kann eine Schutzgasatmosphäre um den zu härtenden Bereich des Werkstücks hergestellt werden, ohne dass beispielsweise eine lokale Kühlung des zu härtenden Bereich durch eine große Menge lokal einströmenden Schutzgases den Härteprozess stört.

Vorteilhafterweise erstrecken sich die Seitenwände der Schutzgashaube in Bewegungsrichtung von der Abschreckbrause mindestens bis zu dem Haubenteil.

Dadurch wird sichergestellt, dass sich eine nach allen Seiten näherungsweise abgeschlossene Schutzgaskammer zwischen Schutzgashaube, Werkstück und Haubenteil ausbildet, die der Bewegungsrichtung entgegen zumindest teilweise durch die Abschreckbrause und ein austretendes Kühlmittel, seitlich durch Werkstück und Schutzgashaube und in Bewegungsrichtung durch das Haubenteil begrenzt wird. So kann ohne eine allzu große Menge an einströmendem Schutzgas eine Schutzgasatmosphäre innerhalb dieser Schutzgaskammer hergestellt werden.

Vorteilhafterweise sind der Induktor, der mindestens eine Schutzgasauslass und die mindestens eine Abschreckbrause an einer Halterung befestigt, die innerhalb der Schutzgashaube und des Haubenteils in Bewegungsrichtung bewegbar ist, wobei die Schutzgashaube und das Haubenteil fest verbunden sind und sich ihre Lage gegenüber dem Werkstück während des Erwärmens und/oder Abschreckens nicht ändert.

Da die Schutzgashaube mit dem Haubenteil abschliesst, ist keine weitere die Schutzgaskammer in Bewegungsrichtung begrenzende Seitenwand notwendig, die gegebenenfalls noch mittels eines weiteren Schutzgasauslasses abgedichtet werden müsste. Da ausserdem die Schutzgashaube nicht in das Haubenteil hinein bewegt wird, das Haubenteil also nur eine ausreichende Höhe zum Aufnehmen des Induktors und des Schutzgasauslasses aufweisen muss, kann die Höhe des Haubenteils entsprechend geringer gehalten werden.

Vorteilhafterweise weist das Haubenteil mindestens eine Auslassöffnung auf. Dadurch wird eine Strömung des Schutzgases in Bewegungsrichtung, nämlich vom Schutzgasauslass zu der Auslassöffnung im Haubenteil, ermöglicht.

Vorteilhafterweise ist zur Erzeugung einer gerichteten Strömung des Schutzgases in Richtung der Bewegungsrichtung eine Absaugeinheit an der mindestens eine Auslassöffnung des Haubenteils angebracht. Dadurch kann eine gerichtete Strömung des Schutzgases in Bewegungsrichtung sichergestellt werden.

Vorteilhafterweise sind neben den einander abgewandten Seiten der Seitenwände der Schutzgashaube weitere, auf das Werkstück gerichtete Abschreckbrausen angeordnet. Dadurch kann ein Anlassen von benachbarten schon gehärteten Bereichen des Werkstücks verhindert werden.

Vorteilhafterweise sind die Abschreckbrausen so ausrichtbar, dass ein Spalt zwischen den Kanten der Seitenwände der Schutzgashaube und den Wänden des Werkstücks abdichtbar ist.

Dadurch wird eine bessere Abdichtung der Schutzgaskammer gegenüber der Umgebung erreicht und somit muss eine geringere Menge Schutzgas in die Schutzgaskammer eingeleitet werden, um einen Überdruck an Schutzgas herzustellen.

Vorteilhafterweise ist mindestens ein Fühler zur automatisierten Positionierung der Härtemaschine am Werkstück vorgesehen.

Werden beispielsweise die einzelnen Zähne eines Zahnradrings nacheinander an der Härtemaschine vorbeibewegt, so kann diese jeweils automatisiert an einer Zahnlücke positioniert werden. Dadurch können mehrere Teilbereiche eines Werkstücks nacheinander vollautomatisch gehärtet werden.

Vorteilhafterweise ist mittels des mindestens einen Schutzgasauslasses ein Überdruck des Schutzgases in der Schutzgaskammer herstellbar.

Durch einen Überdruck an Schutzgas wird sichergestellt, dass der Sauerstoffgehalt in der Schutzgaskammer so gering ist, dass keine Verzunderung auftritt.

Vorteilhafterweise weist das Werkstück Einzelzähne einer Verzahnung mit zu härtenden Zahnflanken auf, wobei während des Erwärmens der Induktor auf den Zahngrund zwischen zwei Zahnflanken hin bewegbar ist, die Schutzgashaube an den Zahnköpfen der zwei Zahnflanken anliegt und das Haubenteil in der Tiefe über den Zahngrund hinaus reicht.

Dadurch wird eine näherungsweise abgeschlossene Schutzgaskammer zwischen dem Werkstück, der Schutzgashaube und zumindest zeitweise dem Haubenteil gebildet und das Härten von jeweils zwei benachbarten Zahnflanken einer Verzahnung unter Schutzgas ermöglicht.

Kurzbeschreibung der Zeichnung Ausführungsbeispiele der Erfindung sind in der Zeichnung dargestellt. Es zeigt die
- Fig. 1: eine erfindungsgemäße Härtemaschine, die
- Fig. 2A,B,C: einen Teil der erfindungsgemäßen Härtemaschine der Fig. 1, die
- Fig. 3: den Teil der Härtemaschine aus Fig. 2 in einer Endposition, die
- Fig. 4: eine weitere Ausführungsvariante des in Fig. 2 dargestellten Teils der erfindungsgemäße Här- temaschine aus Fig. 1, die
- Fig. 5: eine weitere Ausführungsvariante des in Fig. 2 und 4 dargestellten Teils der erfindungsgemäße Härtemaschine aus Fig. 1.

### Ausführungsbeispiele

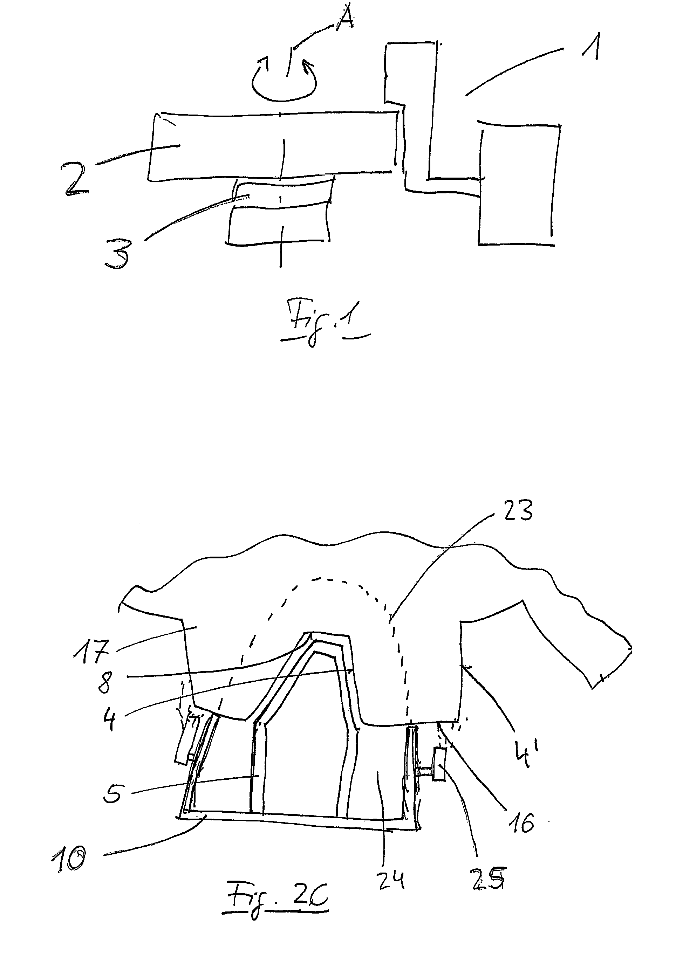

Die Fig. 1 zeigt eine erfindungsgemäße Härtemaschine 1, die seitlich an einem Werkstücks 2 positionierbar ist und zum Härten in vertikaler Richtung von unten nach oben entlang des Werkstücks 2 bewegbar ist. Das Werkstück 2 wird auf einer Halterung 3 gehalten und ist an der Härtemaschine 1 beispielsweise durch Drehen um eine Achse A vorbei bewegbar, so dass mehrere Teilbereiche des Werkstücks nacheinander von der Härtemaschine erreicht und gehärtet werden können. Bei dem Werkstück 2 kann es sich insbesondere um einen Zahnradring handeln, dessen Zahnflanken 4 oder Zahnlücken zu härten sind.

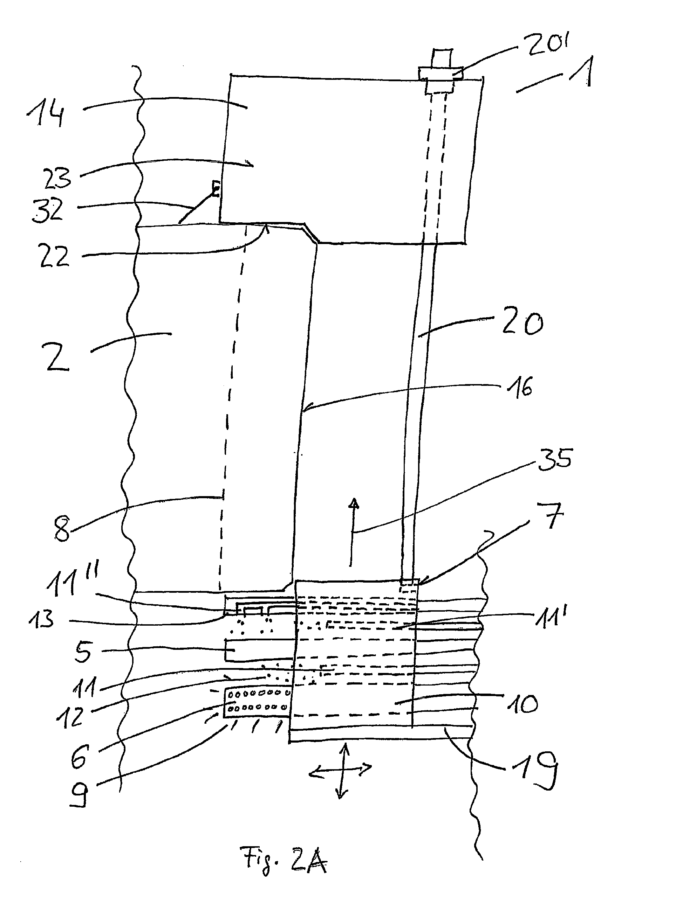

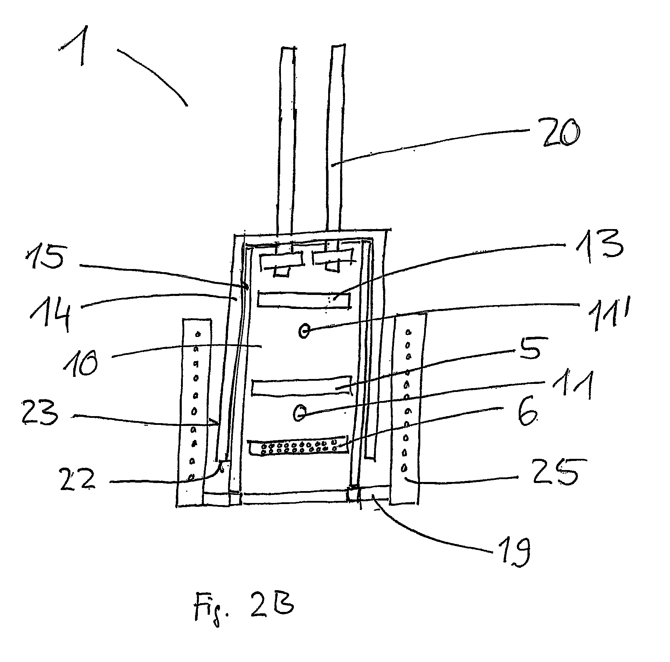

In Fig. 2A, 2B und 2C ist ein Teil der erfindungsgemäßen Härtemaschine 1 aus Fig. 1 detaillierter dargestellt, wobei sich die jeweilige Ausformung der an das Werkstück 2 heranbringbaren Teile der Härtemaschine 1 nach der Geometrie des Werkstücks 2 richtet und eine durch einen Pfeil dargestellte Bewegungsrichtung 35 in vertikaler Richtung von unten nach oben verläuft.

Zum Härten weist die Härtemaschine 1 einen Induktor 5 und eine Abschreckbrause 6 auf, die an einer Rückwand 7 einer Schutzgashaube 10 gehalten werden, wobei die Abschreckbrause 6 in Bewegungsrichtung nach dem Induktor 5 angeordnet ist und die Abschreckbrause 6 und der Induktor 5 mit den entsprechenden Zuführungen für Strom und für mindestens ein Kühlmittel 9 verbunden sind. Die Schutzgashaube 10 mit dem Induktor 5 und der Abschreckbrause 6 ist mittels eines hier nicht dargestellten Motors seitlich so am Werkstück 2 positionierbar, dass der Induktor 5 und die Abschreckbrause 6 in Richtung eines Zahngrunds 8 zwischen zwei benachbarte Zahnflanken 4 bringbar sind. Weiterhin ist die Schutzgashaube 10 mit dem Induktor 5 und der Abschreckbrause 6 mittels eines nicht dargestellten Motors in Bewegungsrichtung 35, also in vertikaler Richtung von unten nach oben entlang der Zahnflanken 4 des Werkstücks 2 bewegbar, so dass die Zahnflanken 4 nach und nach von unten nach oben erst erwärmt und dann abgeschreckt werden.

Die Schutzgashaube 10 weist Seitenwände 15 auf, die seitlich so am Werkstück 2 positionierbar sind, dass eine dem Werkstück zugewandte Kante möglichst direkt an jeweils einen Zahnkopf 16 von je zwei benachbarten Zähnen angrenzt, während sich der Induktor 5 und die Abschreckbrause 6 in Richtung des Zahngrunds 8 zwischen diesen Zähnen befinden.

Die Rückwand 7 verbindet die beiden Seitenwände 15 an der zum Werkstück beabstandeten Seite und erstreckt sich über die gesamte Höhe der Seitenwände 15.

Weiterhin weist die Schutzgashaube 10 mehrere Schutzgaszuführungen und Schutzgasauslässe 11, 11', 11" auf, um im Bereich des zu härtenden Teils des Werkstücks 2 eine Schutzgasatmosphäre, also einen Überdruck eines Schutzgases 12 herzustellen, wodurch eine Verzunderung der erwärmten Bereiche verhindert werden kann. Da das Schutzgas 12 aufgrund der Erwärmung durch den Induktor 5 nach oben steigt, ist mindestens ein Schutzgasauslass 11 unterhalb des Induktors 5, aber oberhalb der Abschreckbrause 6 an der Rückwand 7 befestigt, so dass der erwärmte Bereich von Schutzgas umströmt wird.

Während ein weiterer Schutzgasauslass 11' oberhalb des Induktors 5 ebenfalls direkt an der Rückwand 7 befestigt ist, ist ein dritter Schutzgasauslass 11" an einer weiteren Seitenwand 13 gehalten, wobei die weitere Seitenwand an den Seitenwänden 15 und der Rückwand 7 befestigt ist und sich wie der Induktor 5 und die Abschreckbrause 6 in Richtung des Zahngrunds zwischen zwei Zahnflanken erstreckt und wobei der Schutzgasauslass 11" so angeordnet ist, dass das Schutzgas 12 horizontal in Richtung des Werkstücks oder vertikal nach unten ausströmt.

Die Seitenwände 15 der Schutzgashaube 10 erstrecken sich von der Abschreckbrause 6 bis zur weiteren Seitenwand 13, so dass zwischen dem Werkstück und der seitlich neben dem Werkstück positionierten Schutzgashaube eine Schutzgaskammer 24 entsteht, die durch das Werkstück 2, die Abschreckbrause 6 und das austretende Kühlmittel 9, die weitere Seitenwand 13, die Seitenwände 15 und die Rückwand 7 der Schutzgashaube begrenzt wird und näherungsweise abgeschlossen ist.

Die Schutzgashaube 10 ist auf einer Halterung 19 befestigt, die über den nicht dargestellten Motor M im Raum und insbesondere an das Werkstück heran und an diesem entlang bewegbar ist.

Die Schutzgashaube 10 weist weiterhin eine Führung auf, an der ein Haubenteil 14 entlang der Bewegungsrichtung 35 verschiebbar geführt wird.

Die Führung kann für den Fall einer vertikal verlaufenden Bewegungsrichtung 35 beispielsweise in Form zweier sich in Bewegungsrichtung 35 erstreckender Führungsstangen 20 realisiert werden, wofür in einer Deckenwand 21 des Haubenteils 14 zwei Öffnungen mit jeweils einer Führungsbuchse 20' vorgesehen sind, durch die die Führungsstangen 20 verlaufen.

Das Haubenteil 14 wird von den Führungsstangen 20 in Bewegungsrichtung, also in vertikaler Richtung nicht gehalten und liegt daher entweder wie in Fig. 2B mit einer Deckenwand 21 auf den Seitenwänden 15 der Schutzgashaube 10 auf oder wird vom Werkstück 2 gehalten, indem es mit einem Teil der dem Werkstück 2 zugewandten Kante 22 einer Seitenwand 23 auf der Oberseite des Werkstücks 2 aufliegt, wie es die Fig. 2A zeigt. Liegt das Haubenteil 14 auf der Oberseite des Werkstücks 2 auf, so kann die Schutzgashaube 10 in vertikaler Richtung bewegt werden, ohne dass das Haubenteil 14 gegenüber dem Werkstück 2 seine Lage ändert.

Der sich zwischen den zwei benachbarten Zähnen 17 des Werkstücks 2 , der an das Werkstück 2 herangebrachten Schutzgashaube 10 und dem Haubenteil 14 bildende Innenraum, der als Schutzgaskammer 24 dient, ist nur solange näherungsweise abgeschlossen, solange die Schutzgashaube 10 in Bewegungsrichtung 35 nicht über das Werkstück 2 hinaus ragt, insbesondere solange die weitere Seitenwand 13 noch mit den Wänden des Werkstücks 2 abschliesst. Wird die Schutzgashaube 10 in Bewegungsrichtung über den Rand hinaus bewegt entsteht eine Lücke zwischen der in Richtung Zahngrund 8 reichenden weiteren Seitenwand 13 und dem Werkstück 2. Um weiterhin eine näherungsweise abgeschlossene Schutzgaskammer 24 im zu härtenden Bereich des Werkstücks 2 zu bilden, wird diese Lücke mittels des in Bewegungsrichtung 35 dem Werkstück folgend angeordneten Haubenteils 14 geschlossen.

Um eine zumindest näherungsweise geschlossene Schutzgaskammer 24 zu erzielen, ist es weiterhin wichtig, dass sich das Haubenteil 14 in die Tiefe soweit über das Werkstück 2 erstreckt, dass es vom seitlichen Rand des Werkstücks 2 bis über den Zahngrund 8 hinausreicht.

Das Haubenteil 14 ist weiterhin so ausgebildet, dass die Schutzgaskammer 10 soweit in das Haubenteil 14 hinein bewegbar ist, dass zumindest der Induktor 5 und der Schutzgasauslass 11 soweit hinein passen, dass die Abschreckbrause 6 entlang des gesamten zu härtenden Bereichs des Werkstücks 2 bewegbar ist, ohne dass das Haubenteil 14 von der Oberseite des Werkstücks 2 abgehoben wird. Dies ist wichtig, um die Schutzgasatmosphäre entlang des durch den Induktor 5 erwärmten Teils des Werkstücks 2 so lange aufrecht zu erhalten, bis der erwärmte Teil abgeschreckt ist. Wird dies nicht gewährleistet und es gelangt zu viel Sauerstoff an den erwärmten Teil des Werkstücks 2, kommt es dort zu einer Verzunderung der Oberfläche.

Um das Härten mehrerer Teile eines Werkstücks nacheinander automatisiert durchführen zu können, kann beispielsweise mindestens ein Fühler 32 zur automatischen Positionierung vorzusehen werden, der beispielsweise am Haubenteil befestigt ist. So kann die erfindungsgemäße Härtemaschine 1 beispielsweise automatisiert die Zähne 17 eines Zahnradrings härten, wobei der bewegliche Teil der Härtemaschine jeweils von dem schon gehärteten Teil des Werkstücks beispielsweise nach oben wegbewegt wird, der Zahnradring auf der drehbaren Halterung 3 soweit weiter bewegt wird, bis der nächste zu härtende Teil in Richtung der Härtemaschine zeigt und dann der bewegliche Teil der Härtemaschine mittels des Fühlers 32 wieder von oben an dem Werkstück positioniert wird.

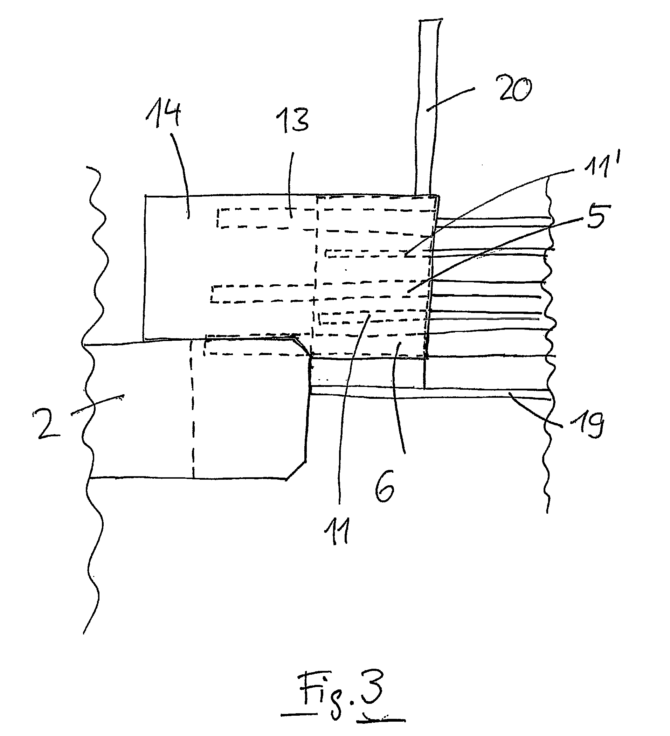

Soll das Werkstücks 2 über seine gesamte Ausdehnung in Bewegungsrichtung 35 gehärtet werden, so muss das Haubenteil 14 so ausgebildet sein, dass zumindest der Induktor 5, die weitere Seitenwand 13 und die Schutzgasauslässe 11, 11' und 11" vollständig in das Haubenteil 14 hinein passen, wie es in Fig. 3 dargestellt ist.

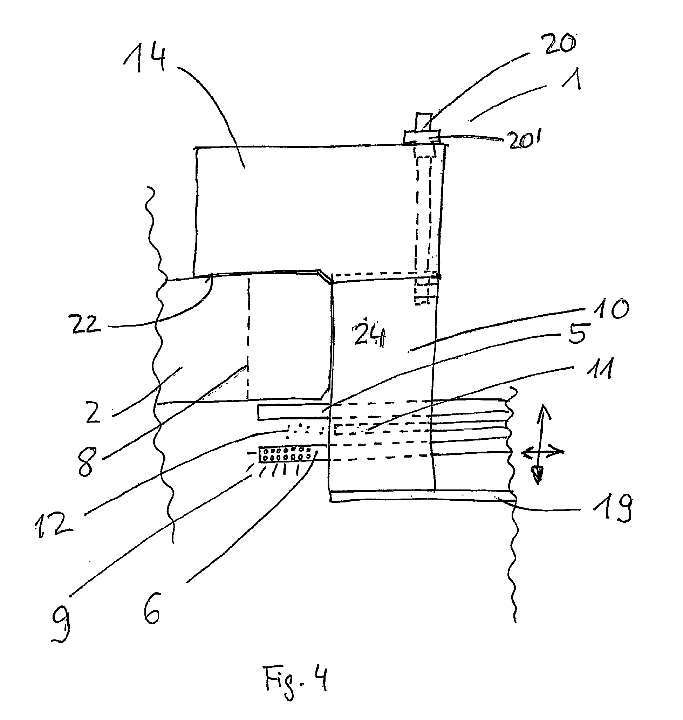

In Fig. 4 ist eine weitere Ausführungsform der erfindungsgemäßen Härtemaschine dargestellt. Anstatt eines an der Schutzgashaube angebrachten weiteren Seitenwand 13 der die Schutzgaskammer 24 in Bewegungsrichtung abschliesst, dient hier das Haubenteil 14 während des gesamten Härteprozesses als abschliessender Deckel der Schutzgaskammer 24. Dafür sind die Seitenwände 15 so ausgebildet, dass sie sich von der Abschreckbrause zumindest bis zur unteren Kante 22 des Haubenteils 14 erstrecken.

Soll das Werkstück 2 über seine gesamte Höhe gehärtet werden, so ist es bei dieser Ausführungsform wichtig, dass das Haubenteil 14 so ausgebildet ist, dass der Induktor 5, die Schutzgasauslässe 11, 11', 11" und die Schutzgashaube 10 so weit in das Haubenteil 14 hinein bewegbar sind, dass der gesamte erwärmte Teil des Werkstücks mittels der Abschreckbrause abgeschreckt werden kann, ohne dass das Haubenteil 14 vom Werkstück weg bewegt wird.

Es wäre natürlich auch möglich Teile der Schutzgashaube 10, wie die Seitenwände 15 und/oder die Rückwand 7 durch das Haubenteil 14 durch das oder an dem Haubenteil 14 vorbei zu führen, wobei entsprechende Führungen und Dichtungen vorgesehen werden müssen.

Durch das Erwärmen der Zahnflanken 4 zwischen zwei benachbarten Zähnen 17 eines Werkstücks 2 mittels eines Induktors 5 kann es auch zu einer Erwärmung in den weiteren benachbarten Teilen des Werkstücks 2 kommen, beispielsweise zu einer Erwärmung der jeweils nächsten Zahnflanke 4' der zwei benachbarten Zähne 17 zwischen denen der Induktor 5 positioniert ist. Um zu verhindern, dass schon gehärtete nächste Zahnflanken 4' nochmals erwärmt, also angelassen werden, können weitere Abschreckbrausen 25 ausserhalb der Schutzgaskammer 24 vorgesehen werden, wie sie in Fig. 2B und 2C dargestellt sind.

Diese weiteren Abschreckbrausen 25 erstrecken sich möglichst über weite Teile der Höhe der Seitenwände 15 der Schutzgashaube 10 oder zumindest von der Höhe der Abschreckbrause 6 bis zur Höhe des Induktors 5. Indem das Kühlmittel 9 aus den weiteren Abschreckbrausen 25 jeweils in Richtung der an das Werkstück angrenzenden Kante der Seitenwand 15 der Schutzgashaube eingeleitet wird, kann ein auftretender Spalt zwischen der Schutzgashaube 10 und dem Werkstück 2 abgedichtet werden.

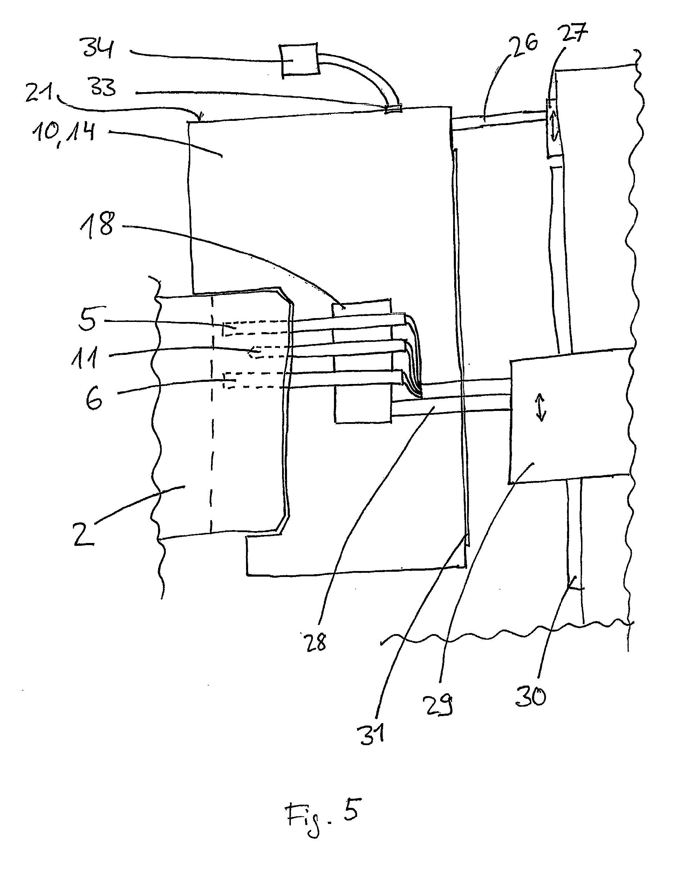

Die Fig. 5 zeigt eine weitere vor allem für Werkstücke 2 mit geringer Höhe geeignete Ausführungsvariante einer erfindungsgemäßen Härtemaschine 1, bei der das Haubenteil 14 fest mit der Schutzgashaube 10 verbunden ist.

Mittels einer Halterung 26 ist die Einheit aus Haubenteil 14 und Schutzgashaube 10 mit einer Führungsschiene 27 mit einem zum Werkstück 2 hin beweglichen Teil der Härtemaschine 1 verbunden und wird entweder von der Halterung 26 an der Führungsschiene 27 gehalten oder liegt nach Heranbringen an das Werkstück 2 mit dem Haubenteil 14 auf der Oberseite des Werkstücks 2 auf.

Der Induktor 5, der mindestens eine Schutzgasauslass 11 und die Abschreckbrause 6 sind an einer Halterung 18 befestigt, die in diesem Ausführungsbeispiel innerhalb der Schutzgashaube 10 angeordnet ist und über die Halterung 28 mit einem Schlitten 29 verbunden ist, der an einer Führung 30 an einem zum Werkstück 2 hin beweglichen Teil der Härtemaschine 1 in vertikaler Richtung beweglich gehalten wird.

Damit die Halterung 18 in vertikaler Richtung entlang des Werkstücks 2 bewegbar ist, ohne dass sich dabei die Lage der Schutzgashaube 10 ändert, ist in der Rückwand 7 der Schutzgashaube 10 eine längliche Öffnung vorgesehen, die die freie Bewegung der Halterung 28 in vertikaler Richtung gegenüber der Schutzgashaube 10 ermöglicht. Die Öffnung erstreckt sich dabei mindestens über die gesamte Höhe, über die die Halterung 28 bewegt werden muss, um sowohl mit dem Induktor 5 als auch mit der Abschreckbrause 6 den gesamten zu härtenden Teil des Werkstücks 2 zu erreichen. Zum Abdichten dieser Öffnung sind zwei Dichtlippen 31 vorgesehen, die die Halterung 28 umschließen und die aus einem Material mit reversibler Verformung oder auch aus Bürsten bestehen können.

Um eine gerichtete Strömung des Schutzgases 12 von dem Schutzgasauslass 11 in vertikaler Richtung nach oben zu erzeugen und so sicher zu stellen, das der zu härtende Teil des Werkstücks 2 von Schutzgas 12 umgeben ist, kann beispielsweise eine Auslassöffnung 33 in der Deckenwand 21 des Haubenteils 14 vorgesehen sein, an der eine Absaugeinheit 34 angeschlossen ist.

### Bezugszeichenliste

- 1: Härtemaschine
- 2: Werkstücken
- 3: Halterung für das Werkstücks 2
- 4: Zahnflanke
- 5: Induktor
- 6: Abschreckbrause
- 7: Rückwand der Schutzgashaube 10
- 8: Zahngrund
- 9: Kühlmittel
- 10: Schutzgashaube
- 11: Schutzgasauslass
- 12: Schutzgas
- 13: weitere Seitenwand der Schutzgashaube 10
- 14: Haubenteil
- 15: Seitenwände der Schutzgashaube 10
- 16: Zahnkopf eines Zahns 17
- 17: Zahn
- 18: Halterung
- 19: Halterung
- 20: Führungsstange
- 20': Führungsbuchse
- 21: Deckenwand des Haubenteils 14
- 22: untere Kante der Seitenwand 23
- 23: Seitenwand des Haubenteils 14
- 24: Schutzgaskammer
- 25: weitere Abschreckbrause
- 26: Halterung
- 27: Führungsschiene
- 28: Halterung
- 29: Schlitten
- 30: Führung
- 31: Dichtlippe
- 32: Fühler
- 33: Auslassöffnung
- 34: Absaugeinheit
- 35: Bewegungsrichtung
- A: Achse

## Patentansprüche

1. Härtemaschine (1) zum induktiven Härten unter Schutzgas, umfassend einen Induktor (5), der zur Erwärmung zumindest eines Teils des Werkstücks (2) an dem Werkstück (2) positionierbar ist, mindestens eine Abschreckbrause (6) für ein Kühlmittel (9) zum Abschrecken des erwärmten Teils des Werkstücks (2), mindestens einen Schutzgasauslass (11), durch den während des Erwärmens und/oder Abschreckens ein Schutzgas (12) geleitet wird, und eine Schutzgashaube (10), die so an das Werkstück (2) bringbar ist, dass eine den zu härtenden Teil zumindest teilweise umgebende Schutzgaskammer (24) entsteht, in der der Induktor (5), die mindestens eine Abschreckbrause (6) und der mindestens eine Schutzgasauslass (11) angeordnet sind, **dadurch gekennzeichnet, dass** die Schutzgashaube (10) zwei Seitenwände (15) aufweist, die jeweils benachbart zum zu härtenden Bereich mit einer Kante an eine Wand des Werkstücks (2) angrenzend positionierbar sind, dass die Schutzgashaube (10) eine zum Werkstück (2) beabstandete Rückwand (7) aufweist, die die Seitenwände (15) verbindet und dass zumindest der Induktor (5), der mindestens eine Schutzgasauslass (11) und die mindestens eine Abschreckbrause (6) zwischen der Schutzgashaube (10) und dem Werkstück (2) angeordnet sind, dass der Induktor (5), der mindestens eine Schutzgasauslass (11) und die mindestens eine Abschreckbrause (6) zum Härten zumindest eines Teils des Werkstücks (2) zusammen entlang des Teils des Werkstücks (2) einer Bewegungsrichtung folgend bewegbar sind, dass der mindestens eine Schutzgasauslass (11) in Bewegungsrichtung nach dem Induktor (5) angeordnet ist, dass die mindestens eine Abschreckbrause (6) in Bewegungsrichtung nach dem mindestens einen Schutzgasauslass (11) angeordnet ist und dass ein in Bewegungsrichtung nach dem Werkstück (2) angeordnetes Haubenteil (14) vorgesehen ist, das während des Erwärmens und/oder Abschreckens in seiner Lage gegenüber dem Werkstück (2) fest bleibt, wobei der Induktor (5) und der mindestens eine Schutzgasauslass (11) so weit in das Haubenteil (14) hinein bewegbar sind, dass der gesamte zu härtende Teil des Werkstücks (2) mittels der mindestens einen Abschreckbrause (6) abschreckbar ist.

2. Härtemaschine (1) nach Anspruch 1, **dadurch gekennzeichnet, dass** die Bewegungsrichtung in vertikaler Richtung von unten nach oben verläuft, so dass das Haubenteil (14) in vertikaler Richtung oberhalb und die Schutzgashaube seitlich des Werkstücks (2) angeordnet ist, der mindestens eine Schutzgasauslass (11) in vertikaler Richtung unterhalb des Induktors (5) angeordnet ist und die mindestens eine Abschreckbrause (5) in vertikaler Richtung unterhalb des mindestens einen Schutzgasauslasses (11) angeordnet ist, wobei die Bewegungsrichtung mit einem vertikal verlaufenden Lot einen spitzen Winkel einschliesst.

3. Härtemaschine (1) nach Anspruch 1 oder 2, **dadurch gekennzeichnet, dass** das Haubenteil (14) Seitenwände (23) und eine Deckenwand (21) aufweist, wobei die Seitenwände (23) in einem horizontalen Schnitt eine geschlossene Form aufweisen und so zum Werkstück (2) angeordnet werden können, dass eine dem Werkstück (2) zugewandte Kante (22) der Seitenwände (23) zumindest teilweise auf einer an den zu härtenden Teil angrenzenden, zur Bewegungsrichtung näherungsweise senkrecht verlaufenden Wand des Werkstücks (2) im Bereich der Erwärmung aufsetzbar ist, wobei die zum Werkstück beabstandete Kante der Seitenwände (23) mit der Deckwand (21) abschliesst.

4. Härtemaschine (1) nach einem der Ansprüche 1 bis 3,
**dadurch gekennzeichnet, dass** mindestens ein weiterer in Bewegungsrichtung vor dem Induktor (5) angeordneter Schutzgasauslass (11', 11") vorgesehen ist.

5. Härtemaschine (1) nach den Ansprüchen 1 bis 4, **dadurch gekennzeichnet, dass** der Induktor (5), der mindestens eine Schutzgasauslass (11) und die mindestens eine Abschreckbrause (6) an der Schutzgashaube (10) gehalten werden und die Schutzgashaube in Bewegungsrichtung entlang des zu härtenden Teils des Werkstücks (2) bewegbar ist.

6. Härtemaschine (1) nach Anspruch 5, **dadurch gekennzeichnet, dass** die Schutzgashaube (10) zumindest teilweise in das Haubenteil (14) hinein bewegbar ist.

7. Härtemaschine (1) nach Anspruch 5 oder 6, **dadurch gekennzeichnet, dass** die Schutzgashaube (10) eine weitere Seitenwand (13) aufweist, die im Bereich des in Bewegungsrichtung vorderen Randes der Seitenwände (15) vor dem Induktor angeordnet ist und näherungsweise mit den Seitenwänden (15), der Rückwand (7) und zumindest zeitweise näherungsweise mit den der Schutzgashaube zugewandten Wänden des Werkstücks (2) abschließt.

8. Härtemaschine nach Anspruch 7, **dadurch gekennzeichnet, dass** die weitere Seitenwand (13) mindestens einen weiteren Schutzgasauslass (11) aufweist, der so angeordnet ist, dass das Schutzgas (12) in Richtung des Werkstücks (2) und/oder der Bewegungsrichtung entgegen ausströmt.

9. Härtemaschine (1) nach einem der Ansprüche 1 bis 8, **dadurch gekennzeichnet, dass** sich die Seitenwände (15) der Schutzgashaube (15) in Bewegungsrichtung von der mindestens einen Abschreckbrause (6) mindestens bis zu dem Haubenteil (14) erstrecken.

10. Härtemaschine (1) nach einem der Ansprüche 1 bis 9, **dadurch gekennzeichnet, dass** der Induktor (5), der mindestens eine Schutzgasauslass (11) und die mindestens eine Abschreckbrause (6) an einer Halterung (18) befestigt sind, die innerhalb der Schutzgashaube (10) und des Haubenteils (24) Bewegungsrichtung bewegbar ist, wobei die Schutzgashaube (10) und das Haubenteil (14) fest verbunden sind und sich ihre Lage gegenüber dem Werkstück (2) während des Erwärmens und/oder Abschreckens nicht ändert.

11. Härtemaschine (1) nach einem der Ansprüche 1 bis 10, **dadurch gekennzeichnet, dass** das Haubenteil (14) mindestens eine Auslassöffnung (33) aufweist.

12. Härtemaschine (1) nach einem der Ansprüche 1 bis 11, **dadurch gekennzeichnet, dass** neben den einander abgewandten Seiten der Seitenwände (15) der Schutzgashaube (10) weitere auf das Werkstück (2) gerichtete Abschreckbrausen (25) angeordnet sind.

13. Härtemaschine (1) nach Anspruch 11, **dadurch gekennzeichnet, dass** die Abschreckbrausen (25) so ausrichtbar sind, dass ein Spalt zwischen den Kanten der Seitenwände (15) der Schutzgashaube (10) und den Wänden des Werkstücks (2) abdichtbar ist.

14. Härtemaschine (1) nach einem der Ansprüche 1 bis 13, **dadurch gekennzeichnet, dass** mindestens ein Fühler (32) zur automatisierten Positionierung der Härtemaschine (1) am Werkstück (2) vorgesehen sind.

15. Härtemaschine (1) nach einem der Ansprüche 1 bis 14, **dadurch gekennzeichnet, dass** das Werkstück (2) Einzelzähne (17) einer Verzahnung mit zu härtenden Zahnflanken (4) aufweist, wobei während des Erwärmens der Induktor (5) auf den Zahngrund (8) zwischen zwei Zahnflanken (4) hin bewegbar ist, die Schutzgashaube (10) an den Zahnköpfen (16) der zwei Zahnflanken (4) anliegt und das Haubenteil (14) in der Tiefe über den Zahngrund (8) hinaus reicht.
